# EUROPEAN PATENT APPLICATION

(11) **EP 2 716 947 A2**
(43) Date of publication of application: **09.04.2014**
(21) Application number: 13186711.1
(22) Date of filing: 30.09.2013
(51) Int. Cl.: F16K 17/10

(54) **Pressure relief valve**

(30) Priority: 05.10.2012 GB 201217877
(71) Applicant: Severn Glocon Limited, Gloucester, Gloucestershire GL2 4NF (GB)
(72) Inventor: Homfray, Allan, Malvern, Worcestershire WR14 2XG (GB); Slater, Darryl, Abbeydale, Gloucestershire GL4 4WZ (GB); Wilder, Barry, Stroud, Gloucestershire GL5 3SJ (GB)
(74) Representative: Oxley, Robin John George

(57) **Abstract**

A pressure relief valve comprises a primary valve member (32) engageable with a primary valve seat (34) to control the passage of fluid between an inlet and an outlet, the primary valve member (32) being spring biased towards a closed position, the primary valve member (32) defining, with an associated housing, a control chamber (40), the fluid pressure within the control chamber (40) applying a load to the primary valve member (32) urging the primary valve member (32) towards the primary seat (34), and a control valve (44) operable to control the fluid pressure within the control chamber (40), the control valve (44) including a control valve member (46) engageable, in a first position thereof, with a first seat (48) to control communication between the control chamber (40) and the inlet and engageable, in a second position thereof, with a second seat (56) to control communication between the control chamber (40) and the outlet, the control valve member (46) being spring biased towards the first position, and defining a piston the fluid pressure upon which urges the control valve member (46) towards its second position.

## Description

This invention relates to a pressure relief valve, and in particular to a pressure relief valve operable to release a fluid from a system in the event that the fluid pressure exceeds a predetermined pressure, but closable when the system pressure has reduced to an acceptable level.

Pressure relief valves are used in a wide range of applications. One application in which such valves are used is in the fluid pressure based circuits of an electrical generation system such as a system operable to generate electricity from the motion of marine waves.

One system by which electricity can be generated using marine wave motion uses paddles which are pivotally mounted to the seabed at locations relatively close to the shore. As a wave passes the paddle, it will tend to drive the paddle for pivotal movement, the paddle returning to its original position after passage of the wave. The movement of the paddle drives a piston for movement. The movement of the piston acts as a pump, pressurizing a fluid within a feed pipeline, the pressurised fluid being used to drive a turbine for rotation, supplying drive to an electrical generator. A return pipeline returns fluid, at a lower pressure, ready for subsequent pressurizing and return to the turbine.

Depending upon weather and sea conditions, the rate and stroke at which the paddle and the piston is moved relative to the rate at which the turbine can be driven for rotation may be such that the fluid pressure within the feed pipeline temporarily exceeds a safe operating pressure. Accordingly, there is a need to provide a pressure relief arrangement whereby fluid can be vented from the feed pipeline in such circumstances to prevent the fluid pressure within the feed pipeline rising further.

One solution may be to provide a valve that can be opened when the conditions are such that the fluid pressure within the feed pipeline would be excessive, allowing fluid to pass from between the feed and return pipelines, bypassing the turbine. However, opening the valve in this manner would result in the fluid pressure within the feed pipeline dropping to a level insufficient to allow the turbine to be driven for rotation. Consequently, electrical generation would cease. Clearly, this is undesirable.

Rather than simply opening a valve in this manner, it is desirable to provide an arrangement whereby excess fluid pressures can be relieved but in which an operating pressure suitable for use in driving the turbine for continued operation can be maintained. Such an arrangement would allow electrical generation to continue, even when the conditions are such that the peak feed pipeline pressure which would otherwise be generated is vented.

Whilst one form of a marine wave powered electrical generation scheme is outlined hereinbefore, it will be appreciated that a number of other schemes are possible and in which a pressure relief valve may be employed to avoid the application of excessive pressures to parts of the system.

It is an object of the invention to provide a pressure relief valve suitable for use in such circumstances.

According to the present invention there is provided a pressure relief valve comprising a primary valve member engageable with a primary valve seat to control the passage of fluid between an inlet and an outlet, the primary valve member being spring biased towards a closed position, the primary valve member defining, with an associated housing, a control chamber, the fluid pressure within the control chamber applying a load to the primary valve member urging the primary valve member towards the primary seat, and a control valve operable to control the fluid pressure within the control chamber, the control valve including a control valve member engageable, in a first position thereof, with a first seat to control communication between the control chamber and the inlet and engageable, in a second position thereof, with a second seat to control communication between the control chamber and the outlet, the control valve member being spring biased towards the first position, and defining a piston the fluid pressure upon which urges the control valve member towards its second position.

In use, when the inlet is below a predetermined pressure, the pressure applied to the piston is insufficient to overcome the spring biasing of the control valve member, thus the control valve member is held in its first position. In this position, the fluid pressure within the control chamber is relatively high, and the combination of the action of the fluid pressure and the action of the spring holds the primary valve member against its seat. If the inlet pressure rises above the predetermined pressure to a level sufficient to cause the control valve member to move, the pressure within the control chamber will drop, allowing the primary valve member to lift from its seat, and so relieving the pressure at the inlet. Should the inlet pressure subsequently drop, the control valve member will move under the action of the spring biasing thereof to allow the control chamber pressure to rise, urging the primary valve member back into engagement with its seat.

Preferably the control chamber pressure drops to an intermediate pressure. Accordingly, closing movement of the primary valve member can occur rapidly when the inlet pressure falls. The difference between the pressure at which the pressure relief valve opens and that at which it closes can thus be very small, with the valve operating rapidly.

The invention further relates to a marine wave generation system including a feed pipeline and a return pipeline, and a pressure relief valve of the type defined hereinbefore and arranged to vent fluid from the feed pipeline to the return pipeline in the event that the pressure within the feed pipeline exceeds a predetermined level.

The invention will further be described, by way of example, with reference to the accompanying drawings, in which:
Figure 1 is a diagram representing part of a marine wave powered electrical generation system incorporating a pressure relief valve according to a first embodiment of the invention;
Figure 2 is a diagrammatic view illustrating a pressure relief valve in accordance with the first embodiment of the invention;
Figures 3 and 4 are views illustrating part of the pressure relief valve in two operating conditions;
Figures 5 to 7 are diagrams illustrating the operation of the invention; and
Figure 8 is a diagram illustrating a modification to the first embodiment.

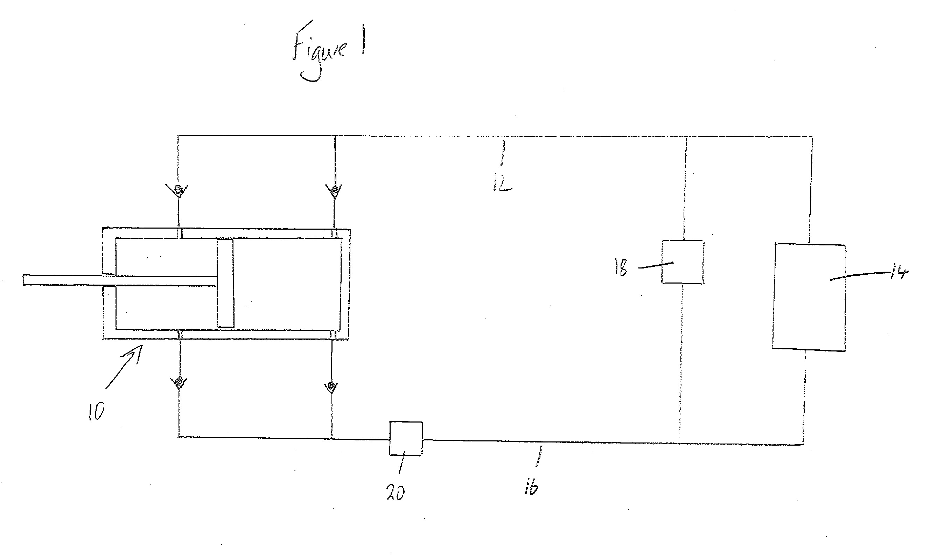

Referring firstly to Figure 1 there is shown a part of a marine wave power generation system. The system comprises a paddle (not shown) which is pivotally mounted, in use, to the sea bed reasonably close to the shore so that the action of waves passing over the paddle causes the paddle to pivot about its mounting. Associated with the paddle is a piston 10, the piston 10 being movable by the paddle as the paddle undergoes pivotal movement. Reciprocating movement of the piston 10 serves to raise the pressure of a fluid within a feed pipeline 12 which connects the piston 10 to a turbine 14. A return pipeline 16 from the turbine 14 returns fluid at a relatively low pressure for subsequent pressurization by the piston 12. The fluid conveniently takes the form of water containing various agents to reduce the risk of corrosion to parts of the system. It is conveniently selected to be environmentally friendly so that, in the event of a leak from the system, the environmental impact of the leak is minimised.

As outlined hereinbefore, there is a risk that under certain weather conditions, the rate of movement of the paddle and distance through which the paddle is moved, and corresponding movement of the piston 10, may be such that the turbine 14 is unable to operate at a sufficiently high rate to pass the fluid to the return line, leading to a pressure build-up in the feed line 12. In order to limit the size of such a pressure build-up, a pressure relief valve 18 is provided which is able to open to divert some of the fluid from the feed line 12 to the return line 16, by-passing the turbine 14.

A check valve 20 may be provided in the return line 16 to prevent the backflow of fluid therein.

For convenience, the turbine 14 and pressure relief valve 18 are preferably located on the land, the feed and return lines 12, 16 carrying the fluid between the sea floor located piston 10 and the land. However, arrangements in which the turbine 14 and/or pressure relief valve 18 are located elsewhere are also possible.

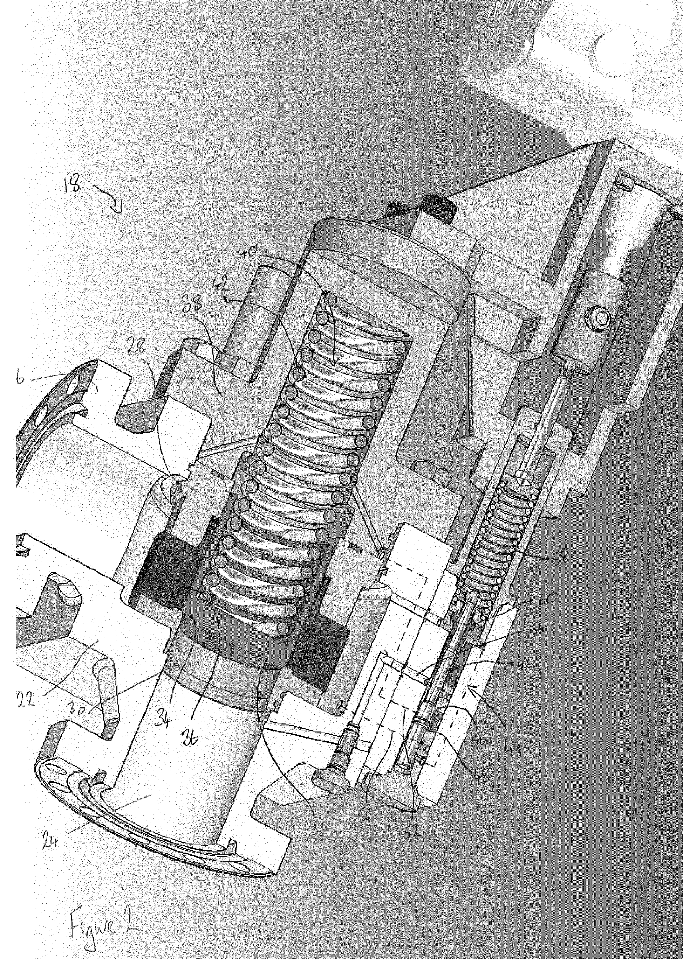

Turning to Figure 2, the pressure relief valve 18 comprises a housing 22 defining an inlet 24 and an outlet 26, each of which is provided with formations to allow suitable seals to be provided to allow the inlet 24 and outlet 26 to be connected, respectively, to the feed line 12 and the return line 16. The housing defines a chamber in which a multi-part valve sleeve 28 is fitted, the sleeve 28 defining a bore 30 within which a primary valve member 32 is located, the primary valve member 32 being slidable within and guided for movement by the bore 30. The bore 30 defines a primary valve seat 34 with which the primary valve member 32 is sealingly engageable to prevent the passage of fluid from the inlet 24 along the bore 30. The sleeve 28 carries a flow trimming device 36 operable to control the rate of fluid flow between the inlet 24 and outlet 26 as the primary valve member 32 is lifted from its seat 34.

The flow trimming device 36 is preferably designed to provide many stages of pressure and/or velocity reduction so as to avoid or restrict the effects of cavitation.

The sleeve 28 is held in position by a cap 38, the cap 38 defining a control chamber 40. The control chamber 40 is defined, in part, by a surface of the primary valve member 32, thus the fluid pressure within the control chamber 40 applies a load to the primary valve member 32 assisting a spring 42 in urging the primary valve member 32 towards its seat 34. It will be appreciated that when the fluid pressure within the control chamber 40 is high, substantially the same as that at the inlet 24, the combination of the action of the fluid pressure and the spring 42 ensures that the primary valve member 32 remains seated and so fluid flow to the outlet 26 is prevented. Reducing the fluid pressure within the control chamber 40 allows the primary valve member 32 to lift away from its seat 34, thereby permitting fluid flow to the outlet 26. The distance through which the primary valve member 32 moves, in combination with the operation of the flow rate trimming device 36 controls the rate of fluid flow to the outlet 26.

A control valve 44 is operable to control the fluid pressure within the control chamber 40, and thereby control the operation of the pressure relief valve 18. The control valve 44 comprises a valve member 46 movable between a first position in which it engages with a first seat 48 to prevent communication between a low pressure line 50 connected to the outlet 26 and a control line 52 connected to the control chamber 40, and in which communication is permitted between the control line 52 and a high pressure line 54 connected to the inlet 24, and a second position in which the valve member 46 engages a second seat 56 to break the high pressure connection to the control line 52, instead connecting the control line 52 to the low pressure line 50. A spring 58 biases the valve member 46 towards the first position.

The valve member 46 carries a piston 60 exposed to the fluid pressure from the inlet 24 via the high pressure line 54. The diameter of the piston 60 is chosen such that the fluid pressure applied load experienced by the effective area thereof exposed to the fluid pressure is able to lift the valve member 46 away from its first position as the pressure at the inlet 24 reaches a predetermined level. It will be appreciated that the inlet pressure level at which the control valve 24 moves is determined not only by the size of the piston 60 but also by the load applied by the spring 58.

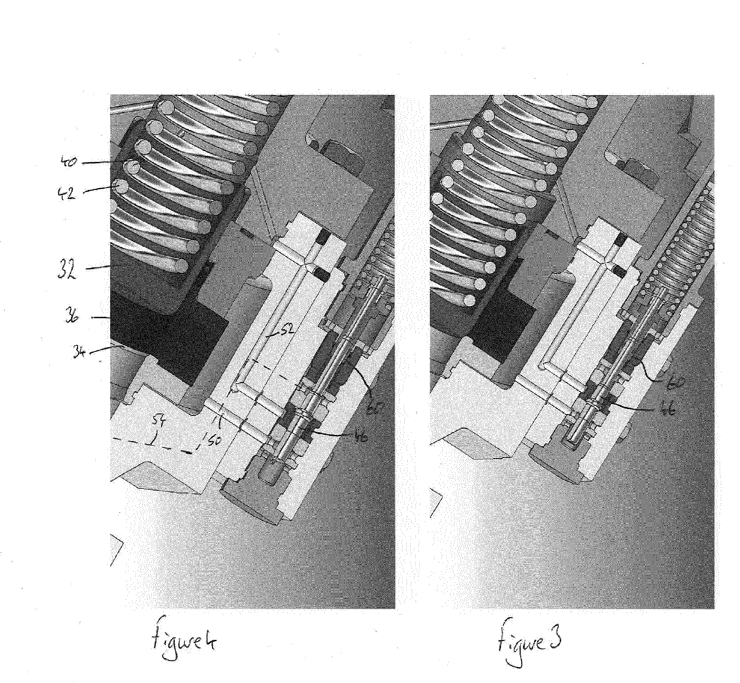

In use, when the fluid pressure within the feed line 12 is sufficiently low that the risk of damage to the system is low and there is no need to relieve the fluid pressure, the fluid pressure at the inlet 24, and hence that applied to the piston 60, is insufficient to lift the control valve member 46 against the action of the spring 58. The control valve member 46 thus occupies its first position as shown in Figure 3. In this position, the valve member 46 engages the first seat 48 and so fluid is not permitted to pass from the control chamber 40 to the low pressure line 50, and communication is established and maintained between the control chamber 40 and the high pressure line 54 connected to the inlet 24. As a result, the control chamber 40 is held at substantially the same pressure as that at the inlet 24, and the combination of the applied fluid pressure on a differential area of the primary valve member 32 (the effective area of the primary valve member 32 exposed to the fluid pressure within the control chamber 40 being greater than that exposed to the fluid pressure beneath the seat 34) and the action of the spring 42 holds the primary valve member 32 against the seat 34, preventing fluid flow to the outlet 26.

If the pressure at the inlet 24 rises, it will be appreciated that the force urging the piston 60 to lift the valve member 46 away from its first position will rise. If the applied pressure reaches that above which it is desirable to relieve the pressure in the feed line 12, then the piston 60 will lift, moving the valve member 46 from its first position towards its second position, breaking or restricting the communication between the inlet 24 and the control chamber 40 and instead establishing communication between the control chamber 40 and the outlet 26. As a consequence, the control chamber pressure will fall, reducing the force holding the primary valve member 32 against its seat 34 to a level at which the primary valve member 32 can lift, allowing fluid to pass from the inlet 24 to the outlet 26, relieving the pressure in the feed line 12. This position is shown in Figure 4.

The design of the control valve 44 is such that whilst communication is established between the control chamber 40 and the outlet 26, the control valve 44 provides a relatively large restriction to fluid flow therebetween. Furthermore, whilst the valve member 46 occupies an intermediate position between its first and second positions, the control chamber 40 communicates with both the inlet 24 and the outlet 26, and the net pressure applied to the control chamber 40 is dependent upon the relative restrictions to fluid flow formed by the valve 44 in these fluid paths. These restrictions to fluid flow are chosen such that the fluid pressure within the control chamber 40 is set at an intermediate level when the control valve 44 occupies an intermediate position.

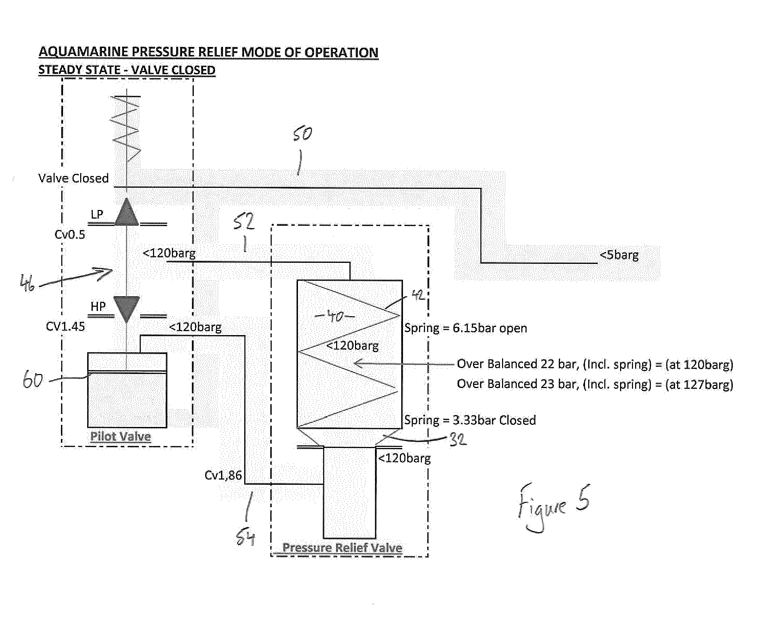

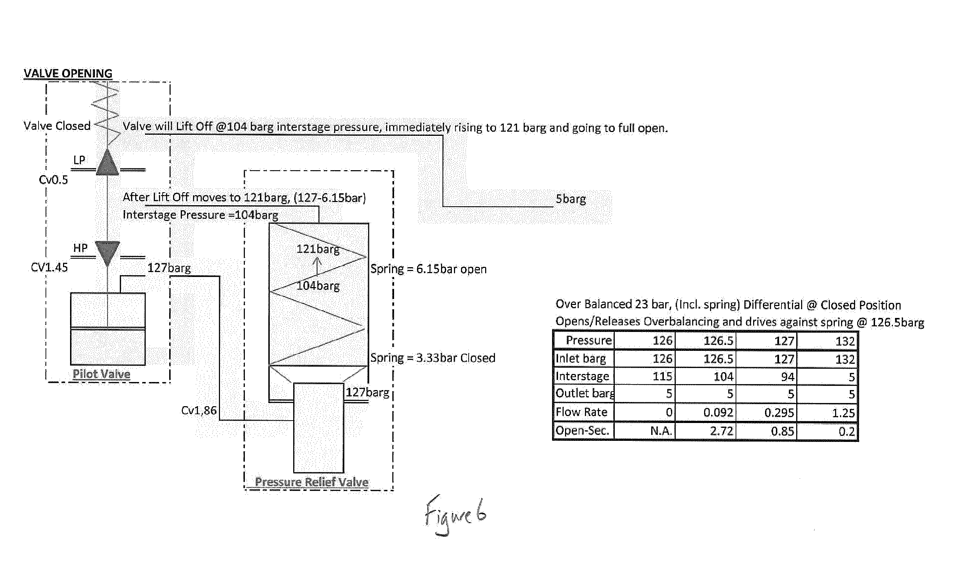

Figures 5, 6 and 7 illustrate, diagrammatically, the operation of the pressure relief valve. Figure 5 illustrates the valve in its steady state closed position. In the arrangement illustrated, the pressure at which the relief valve is set to open is 127barg. The applied pressure at the inlet 24 is shown as being below 120 barg, thus the control valve 44 is occupying its first position. As a consequence, the pressure within the control chamber 40 is below 120barg, and this pressure in combination with the applied spring loading is sufficient to hold the primary valve member 32 against the seat 34, preventing fluid flow to the outlet 26. If the applied pressure rises to, say, 127barg then, as shown in Figure 6, the applied pressure causes the piston 60 to move, adjusting the position of the control valve member 46 with the result that limited communication is established between the control chamber 40 and the outlet 26. The control chamber pressure thus falls, allowing the primary valve member 32 to lift and relieving the fluid pressure at the inlet 24 by venting fluid to the outlet 26. By way of example, the primary valve member 32 may be arranged to lift once the control chamber pressure drop to 104barg. Once open, the effective area of the primary valve member 32 exposed to the inlet pressure rises, with the result that the pressure within the control chamber 40 also rises, for example to 121 barg when the primary valve is fully open.

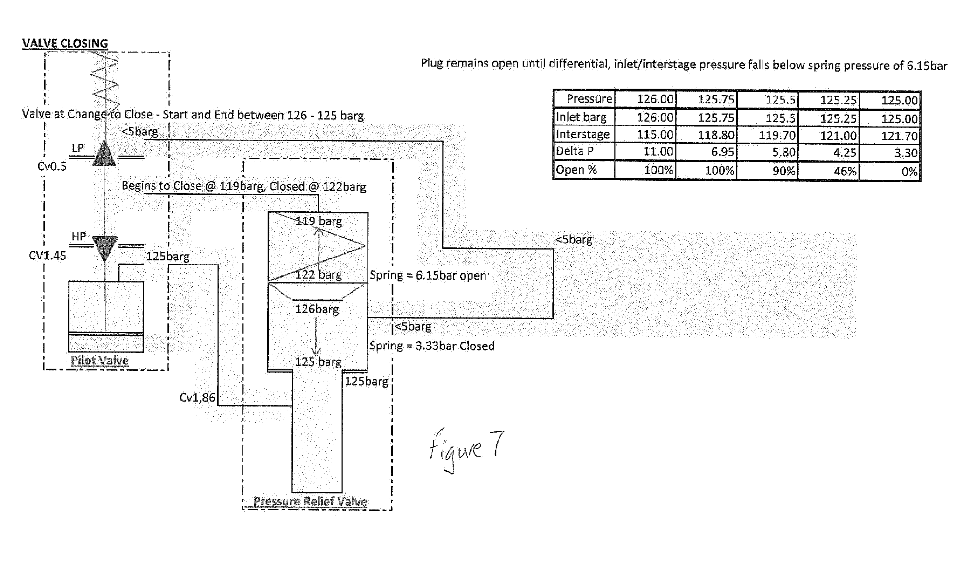

When the inlet pressure drops, the pressure applied to the piston 60 also drops with the result that the control valve member 46 can return back towards its first position, restricting the low pressure connection to the control chamber 40 with the result that the pressure therein rises and a point will be reached at which it is sufficient to return the primary valve member 32 back towards its seated position. By way of example, as shown in Figure 7, the seated position may be achieved with the inlet pressure at, for example 125barg, only slightly lower than the pressure which resulted in opening of the pressure relief valve. As a consequence, it will be appreciated that the operation of the turbine 14 may continue uninterrupted during the pressure relieving operation.

Whilst Figures 5, 6 and 7 provide some example opening and closing pressures, and restriction sizes, it will be appreciated that the invention is not restricted in this regard, and so is also applicable to other valve designs.

In the arrangement shown, the opening pressure is set by appropriate selection of the size of the piston 60 and the spring 58. It will be appreciated that, if desired, an adjustment mechanism may be provided to allow the compression of the spring 58 to be adjusted, and thereby fine tune the opening pressure. Furthermore, this operation could, if desired, be mechanised or automated, for example by including a motor driven adjuster to change the compression of the spring 58 at rest.

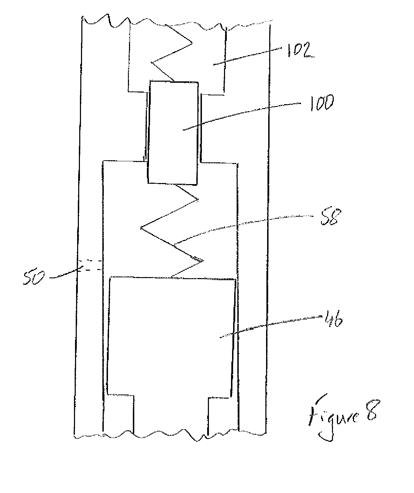

Figure 8 illustrates a modification to the arrangement described hereinbefore and intended for use in applications in which the paddle is located several kilometres offshore (the arrangement described hereinbefore being suitable primarily for use in near shore applications). Where the paddle is located at a significant distance offshore, there is a need for the pressure in the return line 16, and at the outlet 26, to be higher than it is in the low pressure return arrangement described hereinbefore. Furthermore, adjustments may be required to compensate for the installation of the system at a significant depth. By way of example, the outlet pressure may be in the range of 20-60bar. The operation of the arrangement described hereinbefore depends, in part, upon the pressure at the outlet 26. Accordingly, in order to allow its use in installations at a significant depth or at a significant distance offshore, modification of the control valve as shown in Figure 8 may be preferred or required in order to ensure that the control valve opens at a predetermined, fixed pressure.

In the arrangement shown in Figure 8, the end of the spring 58 remote from the valve member 46 is engaged against a pressure compensation piston 100, one end of which is exposed to substantially the outlet fluid pressure, and the other end of which is exposed to the fluid pressure within a pressure compensation control chamber 102. The pressure compensation control chamber 102 is exposed to the fluid pressure at the installation depth.

In use, the pressure compensation piston 100 will occupy a position dictated, in part, by the pressure differential between the outlet pressure and the installation depth pressure, and will accordingly adjust the loading applied by the spring 58 to the valve member 46, modifying the operation of the control valve to suit the conditions in which the valve is being used. The position adopted by the pressure compensation piston 100 will compensate for both variations in the outlet pressure, for example, moving the pressure compensation piston 100 to reduce the applied spring loading as the outlet pressure rises thereby achieving a substantially constant opening pressure for the valve, and will compensate for variations in the installation depth pressure.

Whilst specific embodiments of the invention have been described hereinbefore, it will be appreciated that the invention is not restricted in this regard and that a number of modifications and alterations are possible without departing from the scope of the invention.

## Claims

1. A pressure relief valve comprising a primary valve member (32) engageable with a primary valve seat (34) to control the passage of fluid between an inlet and an outlet, the primary valve member (32) being spring biased towards a closed position, the primary valve member (32) defining, with an associated housing, a control chamber (40), the fluid pressure within the control chamber (40) applying a load to the primary valve member (32) urging the primary valve member (32) towards the primary seat (34), and a control valve (44) operable to control the fluid pressure within the control chamber (40), the control valve (44) including a control valve member (46) engageable, in a first position thereof, with a first seat (48) to control communication between the control chamber (40) and the inlet and engageable, in a second position thereof, with a second seat (56) to control communication between the control chamber (40) and the outlet, the control valve member (46) being spring biased towards the first position, and defining a piston the fluid pressure upon which urges the control valve member (46) towards its second position.

2. A valve according to Claim 1, wherein the control chamber pressure drops to an intermediate pressure, in use.

3. A valve according to Claim 1 or Claim 2, wherein the difference between the pressure at which the pressure relief valve opens and that at which it closes is very small.

4. A marine wave driven electrical generation system including a feed pipeline (12) and a return pipeline (16), and a pressure relief valve as claimed in any of the preceding claims and arranged to vent fluid from the feed pipeline (12) to the return pipeline (16) in the event that the pressure within the feed pipeline (12) exceeds a predetermined level.
